# EUROPEAN PATENT SPECIFICATION

(11) **EP 1 643 337 B1**
(45) Date of publication and mention of the grant of the patent: **23.04.2008**
(21) Application number: 04258049.8
(22) Date of filing: 22.12.2004
(51) Int. Cl.: G06F 21/00

(54) **Management method in a computer system, computer management system, and computer management program**
Verwaltungsmethode in einem Computersystems, Computerverwaltungssystem und Computerverwaltungsprogramm
Procédé de gestion dans un ordinateur, système de gestion pour un ordinateur et logiciel de gestion pour un ordinateur

(30) Priority: 30.09.2004 JP 2004287263
(43) Date of publication of application: 05.04.2006
(73) Proprietor: FUJITSU LIMITED, Kawasaki-shi, Kanagawa 211-8588 (JP)
(72) Inventor: Miyamoto, Yuji, c/o Fujitsu Broad Solution, Shinagawa-Ku Tokyo 141-8581 (JP); Hikita, Mikito, c/o Fujitsu Broad Solution, Shinagawa-Ku Tokyo 141-8581 (JP); Zhou, Sijun, c/o Fujitsu Broad Solution, Shinagawa-Ku Tokyo 141-8581 (JP); Tian, Yue, c/o Fujitsu Broad Solution, Shinagawa-Ku Tokyo 141-8581 (JP)
(74) Representative: Stebbing, Timothy Charles

(56) References cited:
- EP-A- 0 667 572
- EP-A- 1 023 664
- "Using software restriction policies in Windows XP and Windows .NET server to protect against unauthorized software" MICROSOFT WINDOWS XP AND WINDOWS .NET TECHNICAL ARTICLE, January 2002 (2002-01), pages 1-52, XP002959638
- SCHULTZ M G ET AL: "Data mining methods for detection of new malicious executables" PROCEEDINGS OF THE 2001 IEEE SYMPOSIUM ON SECURITY AND PRIVACY. S&P 2001. OAKLAND, CA, MAY 14 - 16, 2001, PROCEEDINGS OF THE IEEE SYMPOSIUM ON SECURITY AND PRIVACY, LOS ALAMITOS, CA : IEEE COMP. SOC, US, 14 May 2001 (2001-05-14), pages 38-49, XP010543206 ISBN: 0-7695-1046-9
- LYMN ET AL: "Preventing the Unauthorised Binary"[Online] 2002, XP002330325 Retrieved from the Internet: URL:http://www.users.on.net/~blymn/veriexe c/sexec.html> [retrieved on 2006-02-01]

## Description

### BACKGROUND OF THE INVENTION

The present invention relates to a management method as defined in claim 1 and a computer management system as defined in claim 4 and a computer management program as defined in claim 5 preventing unauthorized use of application programs in a computer system in which the applications which each user can use are limited.

A computer system such as a personal computer may have two or more users. In this case, in general, each user needs to enter his/her own password first and after the password is, authorized, the computer system becomes available for him/her to use.

Many applications are installed in a computer system and a user needs to specify and load (for example, by double-clicking) an application to use.

When a computer system has two or more users, applications available for each to use are determined in advance, and a management system is provided so as to prevent an application, which a user is not allowed to use, from being activated by the user. Methods, employed by such a management system, for preventing a special application, the use of which is prohibited for a user, from being activated include two methods as follows.

In one of the two methods, the execution file names of applications, which are prevented from being activated for each user, are registered in advance in a management table or the like and when each user tries to activate an application, the execution file name of the application is acquired and if the application is registered in the management table as an application that cannot be activated by the user, the application is terminated immediately.

In the other method, the window title names of applications, which are prevented from being activated for each user, are registered in advance in a management table or the like and when each user tries to activate an application, the window title name of the application is acquired and if the window title name is registered as that of an application that cannot be activated by the user, the application is terminated immediately.

EP-A-0667572 has described the configuration, in which a management program is called when DLL files prepared in advance in a dynamic link library (DLL), as part programs, are called by an application program so that all the requests for activation of an application can be monitored without fail.

"Microsoft Windows XP, Using Software Restriction Policies in Windows XP and Windows .NET Server to Protect Against Unauthorized Software", published by Microsoft Corporation in January and August 2002, discloses the management of restriction policies for unauthorized software. The document specifies four approaches how to identify programs, e.g. by their names or by a hashcode.

"Data Mining Methods for Detetction of New Malicious Executables" by Matthew G.Schultz et. al., published in Proceedings of the 2001 IEEE Symposium on Security and Privacy, S&P 2001, Oakland, CA, May 14 - 16, 2001, Proceedings of the IEEE Symposium on Security and Privacy, Los Alamitos, CA : IEEE Comp. Soc., USA, discloses a statistical method to differentiate between benign and malicious programs by determining the set of DLLs the programs are using.

### SUMMARY OF INVENTION

In the operating systems (O/S) now widely used, the execution file name of an application can be arbitrarily changed by a user. Therefore, for example, it is possible for a user to execute an application by changing the execution file name of the application and activating the application using the changed execution file name. As described above, it is not possible to sufficiently prevent an unauthorized use by the above-mentioned method, in which the execution file names of the prohibited applications are registered and managed.

Moreover, unlike a file name, it is not possible for a user to freely change a window title name, but there may be a case where a window title name can be changed when, for example, the name of a file that is open via an application can be displayed as a window title name, depending on applications. As described above, the window title name is not fixed. Therefore, the method in which - prohibited window title names are registered and managed cannot be regarded as a method that can sufficiently prevent activation according to various applications.

As described above, it is not possible to prevent an intentional unauthorized use by means of the conventiona method in which the execution file names or the window title names of applications, the use of which is prohibited, are registered and managed, because the execution file name or the window title name can be changed. Even when the management method described in Patent document 1 is used, it is not possible to prevent an unauthorized use if the execution file name or the window title name is changed.

An object of the present invention is to realize an easy and more reliable method for preventing an unauthorized use of an application.

In order to attain the above-mentioned object, in a management method of a computer system according to the present invention, an application is identified based on a set of DLL files to be used as a part program.

In other words, the management method of a computer system according to the present invention prevents an unauthorized use of an application program, the use of which is prohibited under predetermined use conditions, the computer system comprising: hardware including a processor; an operating system (O/S) for executing a program; a dynamic link library (DLL) storing a plurality of dynamic link library (DLL) files to be used as part programs; and a plurality of application programs that use at least one of the DLL files as part programs, and is characterized in that: a set of the DLL files for identifying the application program is determined from among the DLL files to be used by the prohibited application program; the determined set of the DLL files is stored in correlation with the predetermined use conditions; use conditions are detected when the activation of the application program is requested; a set of the DLL files used by the application program, the activation of which is requested, is detected; whether the detected use conditions are the stored predetermined use conditions is judged and at the same time, whether the detected set of the DLL files includes the predetermined set of the DLL files stored in correlation with the predetermined use conditions is judged; and when the detected use conditions are judged to be the stored predetermined use conditions and the detected set of the DLL files is judged to include the predetermined set of the DLL files, the application program, the activation of which is requested, is terminated.

As each application uses a DLL file, which is a part program, it is possible to identify an application based on a set of the DLL files to be used. According to the present invention, as a prohibited application is identified based on a set of DLL files, it is possible to identify a prohibited application and prevent the activation thereof even if the execution file name or the window title name of the application is changed.

The use conditions mainly include the name of a user but it is also possible to associate the use conditions with other conditions.

In the O/Ss now used widely, the name of a DLL file can also be changed. However, if the name of a DLL file is changed, it is no longer possible to call a required DLL file from an application and the application cannot be executed, therefore, there is no problem from the standpoint of prevention of the activation of a prohibited application.

Usually, an application uses many DLL files and some DLL files are used commonly in plural applications. Therefore, it is preferable that an application is identified based on a set including at least two or more DLL files. However, there exists that an application can be identified by only one DLL file.

The management method according to the present invention may be a method in which the request of activation of an application is monitored at all times or a method in which the request of activation of an application is monitored automatically in response to a call of DLL files in the same manner as that described in EP-A-0667572.

It is also preferable that detection of a set of DLL files to be used be conducted by detecting DLL files to be called by an application program.

Moreover, the management method according to the present invention can be used together with a conventional method in which the execution file names of prohibited applications are registered in advance. In this case, when activation of an application is requested, the execution file name thereof is acquired and whether the application is a prohibited one is judged. When the application is judged to be a prohibited one, the application is terminated without any further operation and only when the application is judged to be an unprohibited one, a set of DLL files is detected and whether the set is a prohibited one is judged.

According to the present invention, it is possible to easily and more reliably prevent a prohibited application from being activated in a computer system and the reliability of the computer system can be further improved.

### BRIEF DESCRIPTION OF THE DRAWINGS

The features and advantages of the invention will be more clearly understood from the following description taken in conjunction with the accompanying drawings, in which:
Fig.1 is a diagram showing a hierarchial structure of a computer system according to an embodiment of the present invention.
Fig.2 is a diagram for explaining an action of an application to call DLL files.
Fig.3 is a diagram showing a configuration of a program use management system in a computer system according to the embodiment.
Fig.4 is a functional block diagram of a management program according to the embodiment.
Fig.5 is a diagram showing an example of a registry list.
Fig.6 is a flow chart showing a process in the embodiment.
Fig.7 is a flow chart showing an additional process in a modified example.

### DESCRIPTION OF THE PREFERRED EMBODIMENTS

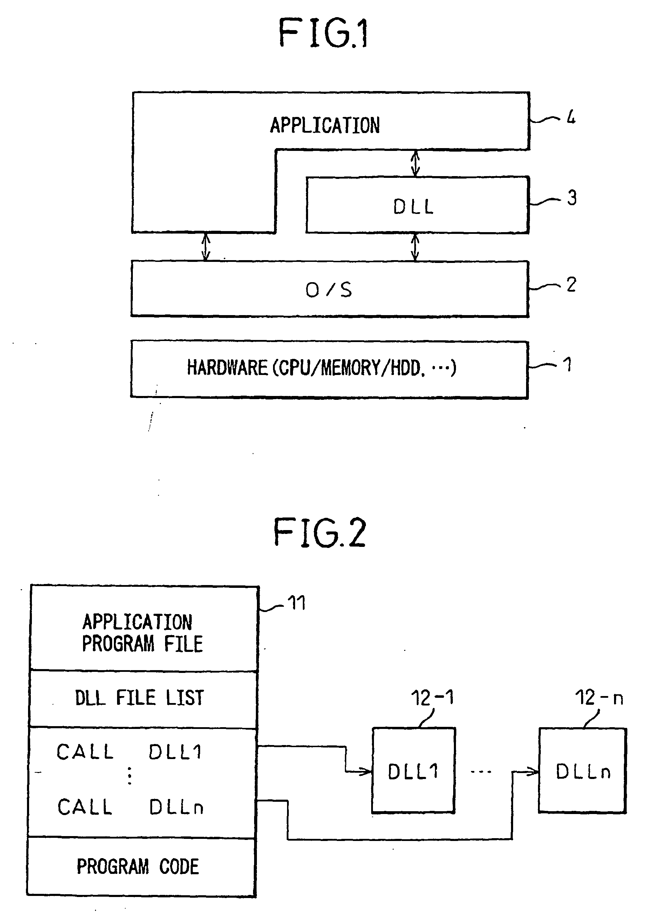

Fig.1 is a diagram showing a hierarchial structure of a computer system according to an embodiment of the present invention. The computer system in the embodiment is a system such as a personal computer or a workstation, used by a plurality of users having different authorities. As shown in Fig.1, the computer system comprises: a hardware layer 1 including memories such as CPU, ROM, and RAM, a hard disc drive (HDD), a monitor, a printer, and various peripheral devices such as a communication function terminal; an operating system (O/S) 2; a dynamic link library (DLL) 3 storing various DLL files to be used as part programs; and an application layer 4. What is managed in the present invention is the activation of an application that uses DLL files. Some applications do not use DLL files, but such applications are in general very simple programs and are not a target to be protected, therefore, no problem is brought about even if the present invention cannot be applied thereto.

Fig.2 is a diagram for explaining an action of an application to call DLL files. The DLL files are programs that are commonly used by various applications and which perform a basic process, and which are programmed into a form in which various basic processes can be easily combined with other processes for use. When an application program is created, it is not necessary to create all the programs from scratch, but proper DLL files are called for use, and are prepared in advance, for basic processes. Due to this, the creation of an application program is made easy and, at the same time, the capacity required for storing all the programs in the computer system can be reduced because common programs are not stored repeatedly, and moreover, the reliability of the computer system is improved because DLL files of excellent quality are used.

An application program file 11 has a header section storing a list of DLL files to use and performs a process to call DLL files 12-1, ..., 12-n at the time of activation. If the process is not performed properly, the application program is not loaded nor executed.

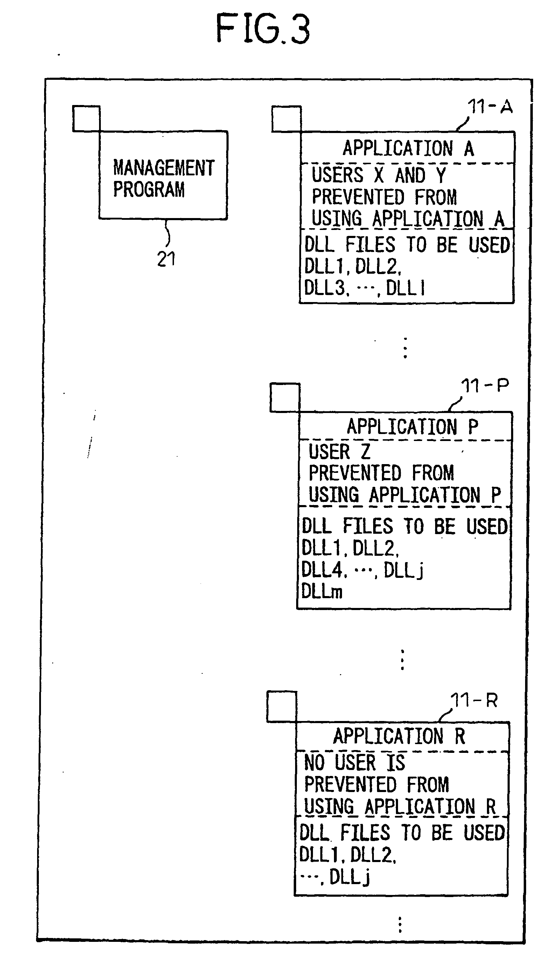

Fig.3 is a diagram showing the configuration of a program use management system in a computer system in the present embodiment. As shown schematically, in addition to various applications 11-A, ..., 11-P, ..., 11-R, ..., a management program 21 is provided. As shown in Fig.1, an O/S and DLL files are also provided, but are not shown here because the hierarchy thereof is different. As described above, each application uses DLL files. The management program 21 performs management in various ways, and when a user tries to activate an application, an unauthorized activation preventing section in the management program 21 judges whether the user is authorized and allows the activation when the user is judged to be an authorized user, but performs a process to terminate the application if the user is judged to be an unauthorized user.

As shown in Fig.3, an application A is one that users X and Y are prohibited from using, and DLL1, DLL2, DLL3, ..., DLL1, etc., are used among the DLL files. An application P is one that a user Z is prohibited from using, and DLL1, DLL2, DLL4, ..., DLLj, DLLm, etc., are used among the DLL files. Moreover, an application R is one that no user is prohibited from using, that is, any user can use the application R, and DLL1, DLL2, ..., DLLj, etc., are used among the DLL files.

Fig.3 is a diagram that only shows that users prohibited from using an application program differ from application to application, and so do the called DLLs, therefore, information about users prohibited from using the application program is not necessarily held in the application program.

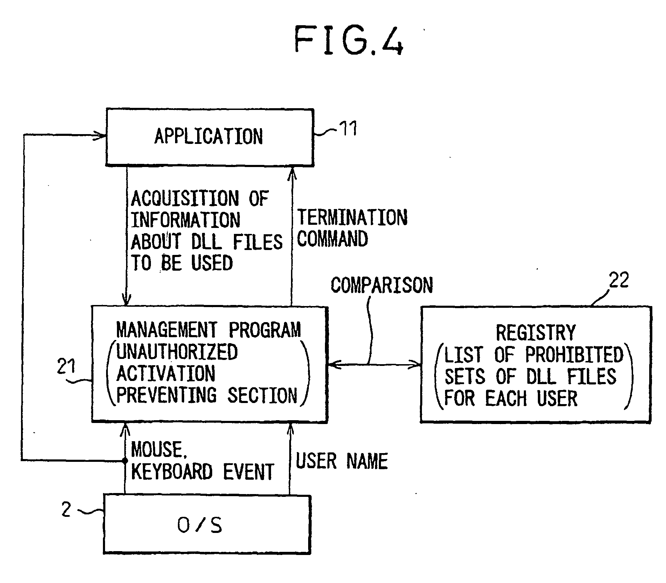

Fig.4 is a block diagram showing the function of the unauthorized activation preventing section provided in the management program 21 in the present embodiment. As shown in Fig.4, when an O/S is directed to activate an application through the operation of a mouse or keyboard, the O/S activates the target application 11 and, at the same time, notifies the management program 21 of the name of a user who directs the activation. The management program 21 acquires a list of the DLL files to be used by the application 11 by monitoring the DLL files called by the activated application 11 and terminates the application in the case of an unauthorized use. In addition, the management program 21 compares the acquired list of the DLL files and the user name with the sets of the DLL files stored in the registry 22, the use of which is prohibited for each user.

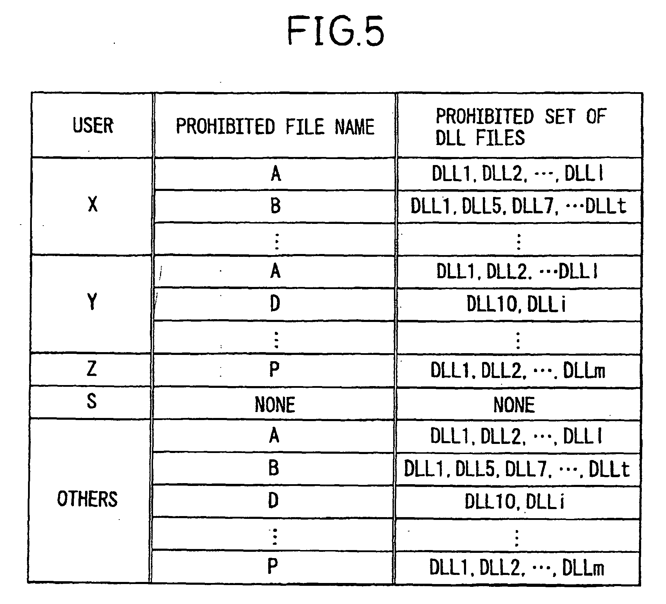

Fig.5 is a diagram that shows an example of a list of the sets of the DLL files stored in the registry 22, the use of which is prohibited for each user. As shown schematically, for each user, the names of the applications, the use of which is prohibited, and a set of a DLL file or a set of two or more DLL files required to identify a prohibited application are stored. It may be acceptable that only the sets of DLL files are stored in the list while the prohibited application names are not stored.

As shown in Fig.5, the user X is prohibited from using the applications A and B, etc., the user Y is prohibited from using the applications A and D, etc., the user Z is prohibited from using only the application P, and a user S is not prohibited from using any application, that is, the user S is allowed to use every application. Other users are prohibited from using the applications A, B, D, P, etc. An application is judged to be the application A when a set of DLL1, DLL2, ..., DLL1 is included, judged to be the application B when a set of DLL1, DLL5, DLL7, ..., DLLt is included, judged to be the application D when a set of DLL10 and DLLi is included, and judged to be the application P when a set of DLL1, DLL2, ..., DLLm is included.

To identify an application, it is not necessary to describe all the DLL files each application uses. For example, when an application uses a DLL file, which none of the other applications uses, it may be acceptable to store only the DLL file in a list. Moreover, when two application, which a certain user is prohibited from using, use five common DLL files and further use one more different DLL file, respectively, and if the set of the five common DLL files can be distinguished from a set of DLL files which another user is prohibited from using, only the set of the five common DLL files needs to be listed.

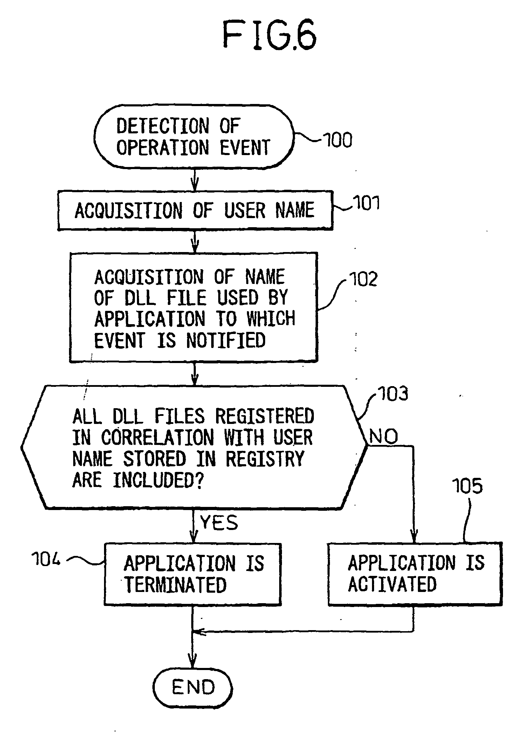

Fig.6 is a flow chart showing the processing procedure of the unauthorized activation preventing section in the management program 21 in the embodiment. As shown in Fig.6, in step 100, the unauthorized activation preventing section detects an operation event to activate an application reacting to a mouse or a keyboard through the O/S. In step 101, the unauthorized activation preventing section acquires the name of a user who tries to perform the operation event to activate the application through the O/S. In step 102, the unauthorized activation preventing section acquires the list of the names of the DLL files to be used by monitoring the called DLL files to be used by the application, the activation of which is directed.

In step 103, it is judged whether all of the set of the DLL files registered in correlation with the user name stored in the registry 22 is included in the acquired list of the names of the DLL files. When all of the set is included in the list, the flow advances to step 104 to terminate the application, because a prohibited application has been activated. When all of the set is not included in the list, that is, a DLL file that is not included in the acquired list of the names of the DLL files exists in the set of the DLL files registered in correlation with the acquired user name stored in the registry 22, the application is not prohibited from being used, therefore, the flow advances to step 105 to continue the activation of the application. In other words, the management program 21 does nothing and no termination command is issued to the application, therefore, the activation of the application is continued and the application is activated eventually.

In the above-mentioned embodiment, whether an application is prohibited from being used is judged based on only the DLL files to be used, but a modified example may be acceptable that employs, in addition to the present method, the conventional method, in which whether an application is prohibited from being used is judged based on the execution file name of the application. In this case, the conventional method, in which whether an application is prohibited from being used can be judged more quickly than the present method, is performed first, and when the application is judged to be an unprohibited application, whether the application is prohibited from being used is further judged based on the DLL files to be used as described in the above-mentioned embodiment.

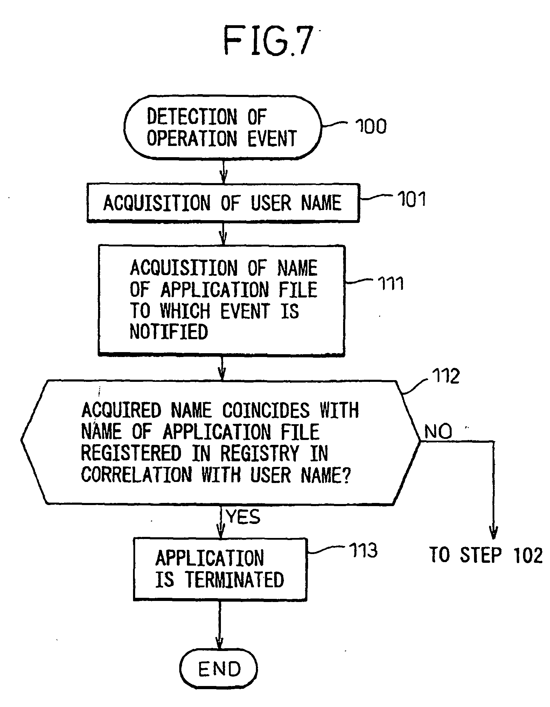

Fig.7 is a flow chart showing processes to be added to the modification example. After steps 100 and 101 in Fig.6 are performed, in step 111 in Fig.7, the execution file name of the application is acquired. Then, it is judged whether the user name stored in the registry 22 shown in Fig.5 and the name of the prohibited application registered in correlation with the user name coincide with the acquired names of the user and the application. When the names of the user and the prohibited application stored in the registry coincide with the acquired names of the user and the application, the flow advances to step 112 to terminate the application, because an application that is prohibited from being used has been activated. If not, the flow advances to step 102 in Fig.6.

The embodiment of the present invention is described as above, but it is needless to say that there can be various modification examples. For example, although the management program detects that the directive to activate an application is issued through the O/S in the embodiment described above, it is also possible to design so that the management program is activated automatically when each application calls DLL files, as described in the above-mentioned Patent document 1.

According to the present invention, as the reliability of a computer system that prevents an unauthorized use can be improved, a computer system used in a field in which strict control is required can be configured at a low cost by applying the present invention thereto.

## Claims

1. A management method in a computer system for preventing an unauthorized use of an application program, the use of which is prohibited under predetermined use conditions, which are detected when the activation of the application program is requested, the computer system comprising:
hardware including a processor;
an operating system (O/S) for executing a program;
a dynamic link library (DLL) storing a plurality of dynamic link library (DLL) files to be used as part programs; and
a plurality of application programs that use at least one of the DLL files as a part program, **characterized in that**
a DLL file or a set of two or more DLL files for identifying the application program is predetermined from among the DLL files to be used by the prohibited application program,
the predetermined DLL file or the predetermined set of the DLL files is stored in correlation with the predetermined use conditions,
a DLL file or a set of the DLL files used by the application program, the activation of which is requested, is detected,
whether the detected use conditions are the stored predetermined use conditions is judged and at the same time, whether the detected DLL file or the set of the DLL files includes the predetermined DLL file or the predetermined set of the DLL files stored in correlation with the predetermined use conditions is judged, and
when the detected use conditions are judged to be the stored predetermined use conditions and the detected DLL file or the set of the DLL files is judged to include the predetermined DLL file or the predetermined set of the DLL files, the application program, the activation of which is requested, is terminated.

2. The management method of a computer system as set forth in claim 1, wherein the detection of the DLL file or the set of the DLL files to be used by the application program, the activation of which is requested, is conducted by detecting a call of the application program for the DLL files.

3. The management method of a computer system as set forth in claim 1, wherein
when the predetermined DLL file or the predetermined set of the DLL files is stored in correlation with the predetermined use conditions, the prohibited application program is also stored in correlation with the predetermined use conditions,
after use conditions are detected when the activation of the application program is requested, it is judged whether the detected use conditions and the application program coincide with the stored predetermined use conditions and the application program stored in correlation with the predetermined use conditions,
when the detected use conditions and the application program are judged to coincide with the stored predetermined use conditions and the application program, the application program, the activation of which is requested, is terminated, and
only when the application program is not terminated, the process in which the DLL file or the set of the DLL files to be used by the application program is detected, the activation of which is requested, and the following processes are performed.

4. A computer management system for preventing an unauthorized use of an application program, the use of which is prohibited under predetermined use conditions, which are detected when the activation of the application program is requested, the computer system comprising:
hardware including a processor;
an operating system (O/S) for executing a program;
a dynamic link library (DLL) storing a plurality of dynamic link library (DLL) files to be used as a part program; and
a plurality of application programs that use at least one of the DLL files as a part program, **characterized in that**
the management system of a computer comprises:
a storing means for storing, in correlation with the predetermined use conditions, a DLL file or a set of two or more DLL files for identifying the application program from among the DLL files to be used by the prohibited application program;
a detecting means for detecting a DLL file or a set of the DLL files to be used by the application program, the activation of which is requested;
a judging means for judging whether the detected use conditions are the stored predetermined use conditions and whether the detected DLL file or the detected set of the DLL files includes the predetermined DLL file or the predetermined set of the DLL files stored in correlation with the predetermined use conditions; and
a means for terminating the application program, the activation of which is requested, when the detected use conditions are judged to be the stored predetermined use conditions and the detected DLL file or the detected set of the DLL files is judged to include the predetermined DLL file or the predetermined set of the DLL files.

5. A computer management program for preventing an application program from being activated specifically adapted to perform all the method steps of claim 1.

## Patentansprüche

1. verwaltungsverfahren in einem Computersystem zum Verhindern einer unerlaubten Verwendung eines Anwendungsprogramms, dessen Verwendung unter vorgegebenen Anwendungsbedingungen verboten ist, die detektiert werden, wenn die Aktivierung des Anwendungsprogramms angefordert wird, welches Computersystem enthält:
Hardware, die einen Prozessor enthält;
ein Betriebssystem (O/S) zum Ausführen eines Programms;
eine dynamische Verknüpfungssammlung (DLL), die eine Mehrzahl von Dynamikverknüpfungssammlungs- (DLL) Dateien speichert, um als Teilprogramme verwendet zu werden; und
eine Mehrzahl von Anwendungsprogrammen, die wenigstens eine der DLL-Dateien als ein Teilprogramm verwenden,
**dadurch gekennzeichnet, dass**
eine DLL-Datei oder ein Satz von zwei oder mehr DLL-Dateien zum Identifizieren des Anwendungsprogramms unter den DLL-Dateien vorbestimmt ist, die von dem verbotenen Anwendungsprogramm zu verwenden sind,
die vorbestimmte DLL-Datei oder der vorbestimmte Satz von den DLL-Dateien in Korrelation mit den vorbestimmten Anwendungsbedingungen gespeichert wird,
eine DLL-Datei oder ein Satz der DLL-Dateien, die von dem Anwendungsprogramm verwendet wird/werden, dessen Aktivierung angefordert wird, detektiert wird,
beurteilt wird, ob die detektierten Anwendungsbedingungen die gespeicherten vorgegebenen Anwendungsbedingungen sind, und gleichzeitig beurteilt wird, ob die detektierte DLL-Datei oder der Satz der DLL-Dateien die vorbestimmte DLL-Datei oder den vorbestimmten Satz der DLL-Dateien enthält/enthalten, die in Korrelation mit den vorbestimmten Anwendungsbedingungen gespeichert ist/sind, und
wenn die detektierten Anwendungsbedingungen beurteilt werden, um die gespeicherten vorbestimmten Anwendungsbedingungen zu sein, und die detektierte DLL-Datei oder der Satz der DLL-Dateien beurteilt wird, die vorbestimmte DLL-Datei oder den vorbestimmten Satz der DLL-Dateien zu enthalten, das Anwendungsprogramm, dessen Aktivierung angefordert wird, beendet wird.

2. Verwaltungsverfahren eines Computersystems nach Anspruch 1, wobei die Detektion der DLL-Datei oder des Satzes von DLL-Dateien, die von dem Anwendungsprogramm zu verwenden ist/sind, dessen Aktivierung angefordert wird, durch Detektieren eines Aufrufs des Anwendungsprogramms für die DLL-Dateien ausgeführt wird.

3. Verwaltungsverfahren eines Computersystems nach Anspruch 1, wobei
wenn die vorbestimmte DLL-Datei oder der vorbestimmte Satz der DLL-Dateien in Korrelation mit den vorbestimmten Anwendungsbedingungen gespeichert wird, das verbotene Anwendungsprogramm auch in Korrelation mit den vorbestimmten Anwendungsbedingungen gespeichert wird,
nachdem Anwendungsbedingungen detektiert wurden, wenn die Aktivierung des Anwendungsprogramms angefordert wurde, beurteilt wird, ob die detektierten Anwendungsbedingungen und das Anwendungsprogramm mit den gespeicherten vorbestimmten Anwendungsbedingungen und dem Anwendungsprogramm, das in Korrelation mit den vorbestimmten Anwendungsbedingungen gespeichert wurde, übereinstimmen,
wenn die detektierten Anwendungsbedingungen und das Anwendungsprogramm beurteilt werden, um mit den gespeicherten vorbestimmten Anwendungsbedingungen und dem Anwendungsprogramm übereinzustimmen, das Anwendungsprogramm, dessen Aktivierung angefordert wird, beendet wird, und
nur wenn das Anwendungsprogramm nicht beendet wird, der Prozess, bei welchem die DLL-Datei oder der Satz der DLL-Dateien, die von dem Anwendungsprogramm zu verwenden ist/sind, detektiert wird, und die nachfolgenden Prozesse ausgeführt werden.

4. Computervcrwaltungssystem zum Verhindern einer unerlaubten Anwendung eines Anwendungsprogramms, dessen Anwendung unter vorbestimmten Anwendungsbedingungen verboten ist, die detektiert werden, wenn die Aktivierung des Anwendungsprogramms aufgerufen wird, welches Computersystem enthält:
Hardware, die ein Prozessor enthält;
ein Betriebssystem (O/S) zum Ausführen eines Programms;
eine dynamische Verknüpfungssammlung (DLL), die eine Mehrzahl von Dynamikverknüpfungssammlungs- (DLL) Dateien speichert, die als Teilprogramm zu verwenden sind; und
eine Mehrzahl von Anwendungsprogrammen, die wenigstens eine der DLL-Dateien als ein Teilprogramm verwenden,
**dadurch gekennzeichnet, dass**
das Verwaltungssystem eines Computers enthält:
Speichereinrichtungen, um in Korrelation mit den vorbestimmten Anwendungsbedingungen eine DLL-Datei oder einen Satz von zwei oder mehr DLL-Dateien zum Identifizieren des Anwendungsprogramms unter den DLL-Dateien zu speichern, die von dem verbotenen Anwendungsprogramm zu verwenden sind;
Detektiereinrichtungen zum Detektieren einer DLL-Datei oder eines Satzes der DLL-Dateien, die von dem Anwendungsprogramm zu verwenden ist/sind, dessen Aktivierung angefordert wird;
Beurteilungseinrichtungen, um zu Beurteilen, ob die detektierten Anwendungsbedingungen die gespeicherten vorbestimmten Anwendungsbedingungen sind, und ob die detektierte DLL-Datei oder der detektierte Satz der DLL-Dateien die vorbestimmte DLL-Datei oder den vorbestimmten Satz der DLL-Dateien enthält, die in Korrelation mit den vorbestimmten Anwendungsbedingungen gespeichert ist/sind; und
Einrichtungen zum Beenden des Anwendungsprogramms, dessen Aktivierung angefordert wurde, wenn die detektierten Anwendungsbedingungen beurteilt werden, die gespeicherten vorbestimmten Anwendungsbedingungen zu sein, und die detektierte DLL-Datei oder der detektierte Satz der DLL-Dateien beurteilt wird, die vorbestimmte DLL-Datei oder den vorbestimmten Satz von DLL-Dateien zu enthalten.

5. Computerverwaltungsprogramm, um ein Anwendungsprogramm daran zu hindern, aktiviert zu werden, spezifisch angepasst, um alle die Verfahrensschritte von Anspruch 1 auszuführen.

## Revendications

1. Procédé de gestion dans un ordinateur pour empêcher une utilisation non autorisée d'un programme d'application, dont l'utilisation est interdite dans des conditions d'utilisation prédéterminées qui sont détectées lorsque l'activation du programme d'application est demandée, l'ordinateur comprenant :
un matériel comprenant un processeur ;
un système d'exploitation (O/S) pour exécuter un programme ;
une bibliothèque de liens dynamiques (DLL) pour stocker une pluralité de fichiers de bibliothèque de liens dynamiques (DLL) à utiliser comme programmes de pièce ; et
une pluralité de programmes d'application qui utilisent au moins un des fichiers DLL comme programme de pièce,
**caractérisé en ce que** :
un fichier DLL ou un ensemble de deux ou plus de deux fichiers DLL pour identifier le programme d'application est prédéterminé parmi les fichiers DLL à utiliser par le programme d'application interdit,
le fichier DLL prédéterminé ou l'ensemble prédéterminé de fichiers DLL est stocké en corrélation avec les conditions d'utilisation prédéterminées ;
un fichier DLL ou un ensemble de fichiers DLL utilisé par le programme d'application dont l'activation est demandée, est détecté,
il est jugé si les conditions d'utilisation détectées sont les conditions d'utilisation prédéterminées stockées, et en même temps, il est jugé si le fichier DLL détecté ou l'ensemble détecté de fichiers DLL comprend le fichier DLL prédéterminé ou l'ensemble prédéterminé de fichiers DLL stocké en corrélation avec les conditions d'utilisation prédéterminées, et
lorsqu'il est jugé que les conditions d'utilisation détectées sont les conditions d'utilisation prédéterminées stockées, et lorsqu'il est jugé que le fichier DLL détecté ou l'ensemble détecté de fichiers DLL comprend le fichier DLL prédéterminé ou l'ensemble prédéterminé de fichiers DLL, le programme d'application dont l'activation est demandée est terminé.

2. Procédé de gestion d'un ordinateur selon la revendication 1, dans lequel la détection du fichier DLL ou de l'ensemble de fichiers DLL à utiliser par le programme d'application dont l'activation est demandée est réalisée en détectant un appel du programme d'application pour les fichiers DLL.

3. Procédé de gestion d'un ordinateur selon la revendication 1, dans lequel :
lorsque le fichier DLL prédéterminé ou l'ensemble prédéterminé de fichiers DLL est stocké en corrélation avec les conditions d'utilisation prédéterminées, le programme d'application interdit est également stocké en corrélation avec les conditions d'utilisation prédéterminées,
une fois que les conditions d'utilisation ont été détectées lorsque l'activation du programme d'application est demandé, il est jugé si les conditions d'utilisation détectées et le programme d'application coïncident avec les conditions d'utilisation prédéterminées stockées et le programme d'application stocké en corrélation avec les conditions d'utilisation prédéterminées,
lorsqu'il est jugé que les conditions d'utilisation détectées et le programme d'application coïncident avec les conditions d'utilisation prédéterminées et le programme d'application stockés, le programme d'application dont l'activation est demandée est terminé, et
uniquement lorsque le programme d'application n'est pas terminé, le procédé dans lequel le fichier DLL ou l'ensemble de fichiers DLL que le programme d'application doit utiliser est détecté, le programme d'application dont l'activation est demandée et les procédés consécutifs à celui-ci sont exécutés.

4. Ordinateur de gestion de système pour empêcher une utilisation non autorisée d'un programme d'application dont l'utilisation est interdite dans des conditions d'utilisation prédéterminées qui sont détectées lorsque l'activation du programme d'application est demandée, l'ordinateur comprenant :
un matériel comprenant un processeur ;
un système d'exploitation (O/S) pour exécuter un programme ;
une bibliothèque de liens dynamiques (DLL) pour stocker une pluralité de fichiers de bibliothèque de liens dynamiques (DLL) à utiliser comme programmes de pièce ; et
une pluralité de programmes d'application qui utilisent au moins un des fichiers DLL comme programme de pièce,
**caractérisé en ce que** :
le système de gestion d'ordinateur comprend :
des moyens de stockage pour stocker, en corrélation avec les conditions d'utilisation prédéterminées, un fichier DLL ou un ensemble de deux ou plus de deux fichiers DLL pour identifier le programme d'application parmi les fichiers DLL que le programme d'application interdit doit utiliser ;
des moyens de détection pour détecter un fichier DLL ou un ensemble de fichiers DLL que le programme d'application dont l'activation est demandée doit utiliser ;
des moyens de jugement pour juger si les conditions d'utilisation détectées sont les conditions d'utilisation prédéterminées stockées, et si le fichier DLL ou l'ensemble détecté de fichiers DLL comprend le fichier DLL prédéterminé ou l'ensemble prédéterminé de fichiers DLL stocké en corrélation avec les conditions d'utilisation prédéterminées, et
des moyens pour terminer le programme d'application dont l'activation est demandée lorsqu'il est jugé que les conditions d'utilisation détectées sont les conditions d'utilisation prédéterminées stockées, et lorsqu'il est jugé que le fichier DLL détecté ou l'ensemble détecté de fichiers DLL comprend le fichier DLL prédéterminé ou l'ensemble prédéterminé de fichiers DLL.

5. Programme de gestion d'ordinateur pour empêcher l'activation d'un programme d'application spécifiquement adapté pour exécuter toutes les étapes de procédé décrites dans la revendication 1.
